# EUROPÄISCHE PATENTANMELDUNG

(11) **EP 0 878 779 A2**
(43) Veröffentlichungstag der Anmeldung: **18.11.1998**
(21) Anmeldenummer: 98108143.3
(22) Anmeldetag: 05.05.1998
(51) Int. Cl.: G07C 5/08, G08G 1/00

(54) **Vorrichtung zur optischen Aufzeichnung der Fahrzeugumgebung**

(30) Priorität: 15.05.1997 DE 19720348
(71) Anmelder: TEMIC TELEFUNKEN microelectronic GmbH, 74072 Heilbronn (DE)
(72) Erfinder: Schilling, Gerhard, 86529 Schrobenhausen (DE); Hora, Peter, 86529 Schrobenhausen (DE); Grosshauser, Frank, 86529 Schrobenhausen (DE)
(74) Vertreter: Maute, Hans-Jürgen, Dipl.-Ing.

(57) **Zusammenfassung**

Die Erfindung betrifft eine Vorrichtung zur optischen Aufzeichnung der Fahrzeugumgebung, insbesondere bei Auffahrunfällen, bei der ein optisches Aufnahmegerät mittels zumindest eines Näherungssensors immer dann aktiviert wird, wenn zumindest ein Näherungssensor das Eindringen eines Objektes in den Nahbereich der Fahrzeugumgebung erkennt. In einem Speicher werden die Bilddaten und gegebenenfalls weitere Fahrzeugdaten so lange gespeichert, bis der Speicher über eine Funktionssteuerung gelöscht und/oder durch neue Daten überschrieben wird. Mit Hilfe von Crashsensoren wird ein Unfall erkannt und das Löschen oder Überschreiben des Speichers verhindert. Vorzugsweise ist der Speicher geeignet, mehrere zeitlich hintereinander folgende Aufnahmen abzulegen. Vorteil der Erfindung ist eine Sicherung besonders signifikanter Beweismittel, insbesondere auch bei Parkplatz- oder Auffahrunfällen.

## Beschreibung

Die Erfindung betrifft eine Vorrichtung zur optischen Aufzeichnung der Fahrzeugumgebung, insbesondere bei Autounfällen, gemäß dem Oberbegriff des Patentanspruchs 1.

Derartige Vorrichtungen sind aus der Schrift DE 32 43 786 A1, DE 35 42 697 A1 sowie DE 37 34 06 A1 bekannt. So weist die DE 32 43 786 A1 eine permanente Verkehrsaufzeichnung mit einer oder mehreren Objektiveinheiten und einem regenerativen Speicher auf. Die von den Objektiveinheiten erfaßte Fahrzeugumgebung wird festgehalten und nach kurzer Zeit wieder gelöscht, um neue Bilder der Fahrzeugumgebung aufzeichnen zu können. Ereignet sich ein Unfall, so treten Stoßsensoren in Aktion, die das Löschen des zuletzt aufgezeichneten Bildes verhindern und eine Bildausgabe in Form einer Kopie auf Papier bewirken.

Aus der DE 35 42 697 A1 ist ein Aufnahmegerät für einen Auffahrunfall bekannt, bei der eine Photokamera mit einem Beschleunigungsmeßgerät verbunden ist und bei Überschreitung eines vorgegebenen Beschleunigungswertes die Aufnahme aktiviert wird.

Aus der DE 37 34 066 A1 ist eine Zusatzeinrichtung für Kraftfahrzeuge bekannt, bei der eine im Fahrzeug angeordnete Filmkamera bei einer Vollbremsung mittels eines Betätigungsschalters im Bremspedal oder auch ohne auch ohne Betätigung des Bremspedals dann in Funktion gesetzt wird, wenn ein plötzlicher Abfall der Fahrgeschwindigkeit erfolgt, z.B. bei einem Auffahrunfall. Ziel aller Vorrichtungen zur optischen Aufzeichnung der Fahrzeugumgebung ist es, insbesondere bei Autounfällen möglichst aussagekräftiges Beweismaterial zu sichern. Die permanente Verkehrsüberwachung gemäß der DE 32 43 786 A1 weist jedoch den Nachteil auf, daß eine permanente Verkehrsaufzeichnung aufgrund des erheblichen Energiebedarfs nicht zur Sicherung eines parkenden Kraftfahrzeuges geeignet ist. Daher schlägt die DE 35 42 697 A1 eine Aktivierung des Aufnahmegeräte über Beschleunigungssensoren vor. Dadurch wird jedoch das Aufnahmegerät erst direkt im Aufprallmoment aktiviert und ein Bild gespeichert, welches kaum geeignet ist, den Unfallhergang zuverlässig zu beschreiben, da die Aufnahme durch die Erschütterungen des Fahrzeuges nur unscharf ist und außerdem oft einen ungünstigen Bildausschnitt bietet. So kann oft weder das Nummernschild noch der Fahrer des anderen Unfallfahrzeuges erkannt werden.

Die DE 37 34 066 A1 sieht eine Aktivierung der Aufnahme bei einer Vollbremsung durch einen Betätigungsschalter am Bremspedal oder ergänzend bei einem plötzlichen Abfall der Fahrgeschwindigkeit vor. Auch diese Lösungen sind nicht geeignet, um bei den häufig auftretenden Parkplatzunfällen zur Identifizierung von Fahrerflüchtigen beizutragen.

Aufgabe der Erfindung ist es daher, die Vorrichtung zur optischen Aufzeichnung der Fahrzeugumgebung derart weiterzuentwickeln, daß mit einfachen Mitteln möglichst allen Verkehrssituationen, insbesondere auch bei parkenden Autos, geeignetes Beweismaterial gesichert werden kann.

Die Aufgabe ist durch die kennzeichnenden Merkmale des Patentanspruchs 1 gelöst.

Anstelle die Crashsensoren zur Aktivierung des Aufnahmegerätes zu verwenden, ist erfindungsgemäß zumindest ein Näherungssensor am Fahrzeug vorgesehen, der die Änderung des Abstandes von Objekten in einem Nahbereich der Fahrzeugumgebung erkennt und das Aufnahmegerät nur dann aktiviert wird, wenn zumindest ein Näherungssensor das Eindringen eines Objektes in den Nahbereich erkennt.

Vorteil der erfindungsgemäßen Vorrichtung ist, daß einerseits nur bedarfsgerecht das Aufnahmegerät aktiviert wird und somit gerade auch bei ruhendem Verkehr eine möglichst lange Betriebsbereitschaft der Anordnung gewährleistet wird. Außerdem ist mit dem Näherungssensor eine Früherkennung noch kurz vor dem eigentlichen Crash möglich, so daß in einem für den Unfallhergang und für die Schuldfrage besonders signifikanten Zeitpunkt die Fahrzeugumgebung erfaßt wird. Außerdem ist es möglich, bestimmte Details am Fahrzeug, am Fahrer, an der Umgebung (beispielsweise Nummernschild, Blickrichtung des Fahrers, Gegenverkehr) zu erfassen, was bei den heftigen Erschütterungen während des Fahrzeugaufpralls aufgrund optischer Verzerrung nicht sicher gewährleistet ist. Nachteil der Verwendung eines Näherungssensors ist, daß dieser zunächst jedes in den Nahbereich der Fahrzeugumgebung eindringendes Objekt erkennt und entsprechend das Aufnahmegerät aktiviert. Tritt jedoch innerhalb einer vorgegebenen Zeitspanne kein Unfall auf, welche wie bisher bekannt, mittels Crashsensoren erfaßt und daraufhin das Löschen oder Überschreiben des Speichers verhindert wird, so werden die überflüssig gemachten Aufnahmen gelöscht bzw. überschrieben. So wird zwar die Vorrichtung zur optischen Aufzeichnung der Fahrzeugumgebung bei starkem Innenstadtverkehr nahezu dauerhaft aktiviert werden, dadurch aber auch sicherstellen, daß nahezu jeder Unfallhergang frühzeitig erkannt und entsprechende Beweismittelt gesichert werden.

Vorteilhafte Weiterbildungen der Erfindung beschreiben die Patentansprüche 2 und 3.

Die immer besseren Bildkomprimierungsverfahren und die leistungsfähigere Speicherherstellung ermöglichen es, den Speicher derart auszugestalten, das an mehrere zeitlich ineinander liegende Aufnahmen von der Fahrzeugumgebung speichern kann. Sinnvollerweise wird dann der Speicher immer nur genau so weit gelöscht bzw. überschrieben, wie dies zum Abspeichern der nachfolgenden Aufnahme erforderlich ist. Wird dann zum Zwecke der Unfallauswertung über eine Schnittstelle der Speicherinhalt ausgelesen, so stehen mehrere Aufnahmen zur Beschreibung des Unfallhergangs zur Verfügung. Als Crashsensoren können dabei elektrische oder mechanische Beschleunigungssensoren, sowie Aufprallsensoren verwendet werden, die bereits zur Airbagaktivierung genutzt werden. Die Näherungssensoren können auch als Einparkhilfe oder für automatische Fahrzeugleitsysteme, beispielsweise zur automatischen Bremsaktivierung, zur Erkennung von Fahrzeugen im toten Winkel des Rückspiegels oder als Leithilfe für einen Fahrzeugspurwechsel verwendet werden. Besonderer Vorteil der Anordnung ist also, auf bereits vorgesehene Bestandteile im Auto zugreifen zu können und diese mehrfach zu nutzen, so daß die Kosten für die Gesamtanordnung in einem marktfähigen Bereich bleiben.

Die Erfindung wird nachfolgend anhand eines Ausführungsbeispieles bezugnehmend auf die Figur erläutert.

Es zeigt:

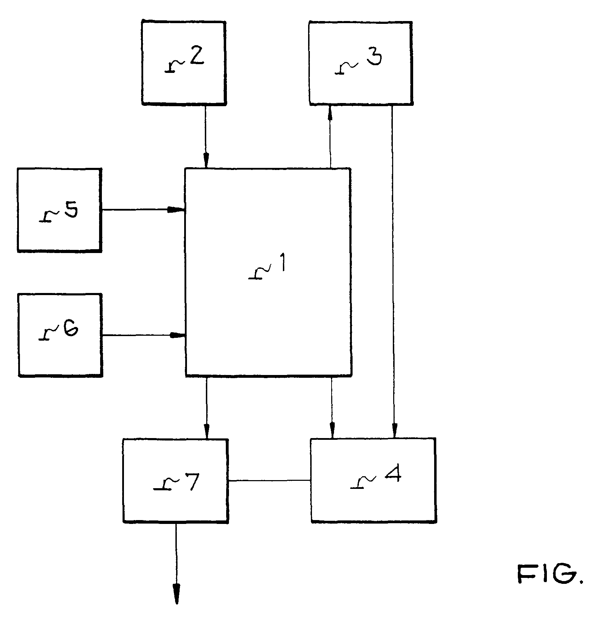

- Figur 1: ein Blockschaltbild der erfindungsgemäßen Vorrichtung.

Die einzige Figur zeigt ein Blockschaltbild der erfindungsgemäßen Vorrichtung zur optischen Aufzeichnung der Fahrzeugumgebung, bestehend aus: einer Funktionssteuerung 1, einem Näherungssensor 2, einem Aufnahmegerät 3, einem Bildspeicher 4, einem Crashsensor 5 und einem Fahrzeugdatenschreiber 6 sowie einer Schnittstelle 7.

Das Funktionsprinzip ist wie folgt: Zumindest ein Näherungssensor wird durch das Eindringen eines Objektes in den Nahbereich der Fahrzeugumgebung ausgelöst und teilt dies der Funktionssteuerung mit. Die Funktionssteuerung aktiviert daraufhin das Aufnahmegerät sowie gegebenenfalls den Crashsensor oder den Fahrzeugdatenschreiber. Werden mehrere Näherungssensoren verwendet, kann vorzugsweise das Aufnahmegerät auch in die Richtung ausgerichtet werden, aus der das Objekt in den Nahbereich eindringt. Das Aufnahmegerät erfaßt das Objekt und speichert die Information im Bildspeicher ab. Verbleibt das Objekt im Nahbereich oder nähert sich ein neues Objekt in diesen, so wird dieses wiederum vom Aufnahmegerät erfaßt und im Bildspeicher abgelegt. Die Funktionssteuerung sorgt dabei dafür, daß das jeweils älteste abgespeicherte Bild neu überschrieben wird. Außerdem prüft die Funktionssteuerung permanent die Signale vom Crashsensor und sorgt dafür, daß beim Auftreten eines Crashs die im Bildspeicher gespeicherten Daten nicht wieder überschrieben werden könnten. Ergänzend ist es möglich, zusätzlich Daten vom Fahrtenschreiber, beispielsweise die aktuelle Uhrzeit, die Eigengeschwindigkeit des Fahrzeugs und die auftretende Bremsbeschleunigung, mit abgespeichert wird. Über eine Schnittstelle wird die Datenausgabe aus dem Bildspeicher durchgeführt.

Als Näherungssensoren können dabei aktive sowie passive, optische oder akustische Näherungssensoren verwendet werden, auch Radarabstandswarner oder Magnetsensoren sind denkbar. Es ist dabei vorzugsweise auf dieses Thema zurückzugreifen, die auch für andere Funktionen im KFZ eingesetzt werden sollen. Als Crashsensoren bieten sich elektrische oder mechanische Beschleunigungssensoren an, wie sie zur Aktivierung von Airbag-Sicherheitseinrichtungen angewendet werden. Auch Aufprallsensoren sind denkbar. Als Aufnahmegerät sind analoge oder digitale Photo- oder Filmapparate, bzw. Videokameras verwendbar. Zur Verbesserung der Bildqualität können alle Arten von Lichtverstärkern Verwendung finden, sofern die gesetzlichen Vorschriften über Kraftfahrzeuge dies zulassen. Beispielsweise könnte die Fahrzeugbeleuchtung des eventuell beschädigten Fahrzeuges aktiviert werden. Als Bildspeicher sind insbesondere nichtflüchtige Speichermedien einzusetzen, so daß auch bei Abtrennung der Batterieversorgung während des Unfalls eine Aufrechterhaltung des Speicherinhalts gewährleistet bleibt. Als Funktionssteuerung ist ein einfacher Mikroprozessor vorgesehen.

## Patentansprüche

1. Vorrichtung zur optischen Aufzeichnung der Fahrzeugumgebung, insbesondere bei Autounfällen, bestehend aus:
- einem Aufnahmegerät, welches zumindest einen Teil der Fahrzeugumgebung erfaßt
- einem Speicher, der die Bilddaten und gegebenenfalls weitere Fahrzeugdaten solange bis der Speicher über eine Funktionssteuerung gelöscht und/oder durch neue Daten überschrieben wird,
- wobei mit Hilfe von Crashsensoren ein Unfall erkannt und dann das Löschen oder Überschreiben des Speichers verhindert wird,
**dadurch gekennzeichnet, daß**
- zumindest ein Näherungssensor am Fahrzeug vorgesehen ist, der die Änderung des Abstandes von Objekten in einem Nahbereich der Fahrzeugumgebung erkennt und
- das Aufnahmegerät nur dann aktiviert wird, wenn zumindest ein Näherungssensor das Eindringen eines Objektes in den Nahbereich erkennt.

2. Vorrichtung zur optischen Aufzeichnung der Fahrzeugumgebung gemäß Patentanspruch 1, **dadurch gekennzeichnet, daß** der Speicher so groß ist, daß er mehrere zeitlich hintereinander liegende Aufnahmen von der Fahrzeugumgebung speichern kann und der Speicher nur immer genau so weit gelöscht bzw. überschrieben wird, wie das zum abspeichern der nächstfolgenden Aufnahme erforderlich ist.

3. Vorrichtung gemäß einem der vorangehenden Ansprüche, **dadurch gekennzeichnet, daß** über eine Schnittstelle der Speicherinhalt ausgelesen werden kann.
